# EUROPÄISCHE PATENTSCHRIFT

(11) **EP 4 351 864 B1**
(45) Veröffentlichungstag und Bekanntmachung des Hinweises auf die Patenterteilung: **02.04.2025**
(21) Anmeldenummer: 22733560.1
(22) Anmeldetag: 08.06.2022
(51) Int. Cl.: B29C 49/12, B29C 49/64, B29C 49/06, B29C 49/36, B29K 67/00, B29L 31/00

(54) **VORRICHTUNG ZUM HERSTELLEN VON BEHÄLTERN AUS THERMISCH KONDITIONIERTEN VORFORMLINGEN AUS THERMOPLASTISCHEM MATERIAL**
DEVICE FOR PRODUCING CONTAINERS FROM TEMPERATURE CONTROLLED PREFORMS MADE OF THERMOPLASTIC MATERIAL
DISPOSITIF DE FABRICATION DE RÉCIPIENTS À PARTIR DE PRÉFORMES À TEMPÉRATURE RÉGULÉE EN MATIÈRE THERMOPLASTIQUE

(30) Priorität: 10.06.2021 DE 102021115026
(43) Veröffentlichungstag der Anmeldung: 17.04.2024
(73) Patentinhaber: KHS GmbH, 44143 Dortmund (DE)
(72) Erfinder: GROPMANN, David, 22047 Hamburg (DE); RASCH, Jens-Peter, 22927 Großhansdorf (DE); ROMMEL, Christian, 23617 Stockelsdorf (DE)
(74) Vertreter: Greiche, Albert
(86) Internationale Anmeldenummer: PCT/EP2022/065461
(87) Internationale Veröffentlichungsnummer: WO 2022/258643

(56) Entgegenhaltungen:
- WO-A1-2011/079917
- DE-A1- 102011 009 889
- US-A1- 2020 346 390

## Beschreibung

Die Erfindung betrifft eine Vorrichtung zum Herstellen von Behältern aus thermisch konditionierten Vorformlingen aus thermoplastischem Material.

Zur Herstellung von Behältern werden Vorformlinge verwendet, die aus thermoplastischem Material bestehen. Diese Vorformlinge werden zunächst thermisch konditioniert und dann mittels eines Streckblasprozesses in Formwerkzeugen zu Behältern geformt. Dabei wird unter anderem eine Reckstange in den Vorformling eingeführt, die den Vorformling entlang seiner Längsachse reckt. In axialer Richtung wird die Ausformung mittels eines Blasgases durchgeführt, mit dem der Vorformling innerhalb der Form expandiert wird, sodass der Vorformling an die Innenwände der Form gedrückt wird. Die Behälter weisen nach ihrer Ausformung noch Restwärme aus der thermischen Konditionierung der Vorformlinge auf. Durch diese Restwärme ist das Material der Behälter noch nicht stabil und die Behälter können ihre Form noch nicht halten. Daher werden die Formwerkzeuge bzw. die ausgeformten Behälter nach der Ausformung der Behälter gekühlt, um diese Restwärme aus dem Material der Behälter abzuleiten.

Zur Unterstützung der Ableitung der Restwärme ist aus EP 2 040 905 B1 bekannt, nach der Expansion des Vorformlings ein kühlendes Gas aus der Reckstange heraus in Richtung auf einen Boden des ausgeformten Behälters zu leiten. Das Gas kann dabei zum Beispiel Blasgas sein, das nach einem Senken des Drucks in den Behälter eingeleitet wird, um die Restwärme aus dem Material des Behälters aufzunehmen.

Aus WO 2011/079917 A1 ist ein Blasformsystem bekannt. Das Blasformsystem umfasst ein Blasformgehäuse, das einen Formhohlraum definiert. Das Blasformsystem umfasst auch eine Reckstange, die innerhalb des Formhohlraums beweglich ist. Die Reckstange umfasst eine erste Reckstangenkomponente, die einen ersten Fluidströmungsweg definiert. Die Reckstange umfasst auch ein erstes Ventil, das mit der ersten Reckstangenkomponente gekoppelt ist und geeignet ist, selektiv einen Fluidverbindungsweg zwischen dem ersten Fluidströmungsweg und dem Formhohlraum bereitzustellen.

Weiter sind aus DE 10 2011 009 889 A1 ein Verfahren und eine Vorrichtung bekannt, die zur Herstellung von gefüllten Behältern dienen. Ein Vorformling aus einem thermoplastischen Material wird zunächst entlang eines Transportweges im Bereich einer Heizstrecke einer thermischen Konditionierung unterworfen. Anschließend wird der Vorformling innerhalb einer Form durch Druckeinwirkung in den Behälter umgeformt. Als Fluid zur Behälterformung wird ein in den Behälter abzufüllendes Füllmedium verwendet. Der Vorformling wird während seiner Umformung in den Behälter mindestens zeitweilig geführt.

Aus US 2020/346390 A1 ist ein Verfahren zur Herstellung eines Flüssigkeitsbehälters bekannt, bei dem eine Düseneinheit eine Blasdüse mit einer Zuführungsöffnung und einen Ersatzzuführungsschlauch mit einer Ersatzzuführungsöffnung an seinem unteren Ende aufweist. Das Verfahren umfasst einen Luftablassschritt zum Ablassen der Luft in der Vorform nach außen durch Zuführen einer Flüssigkeit in die Vorform aus der Ersatzzufuhröffnung, die sich an einem unteren Abschnitt der Vorform befindet; einen Flüssigkeitsblasformungsschritt zum Formen der Vorform zu einem Flüssigkeitsbehälter durch Zuführen einer unter Druck stehenden Flüssigkeit aus der Zufuhröffnung in die Vorform; und einen Kopfraumbildungsschritt zum Bilden eines Kopfraums durch Ablassen der Flüssigkeit aus dem Inneren des Flüssigkeitsbehälters.

Aufgabe der Erfindung ist es, eine Vorrichtung zum Herstellen von Behältern aus thermisch konditionierten Vorformlingen aus thermoplastischem Material bereitzustellen, die ein weiter erhöhtes Kühlpotenzial und eine verbesserte Effizienz aufweist.

Die Aufgabe wird gelöst durch die Merkmale der unabhängigen Ansprüche. Vorteilhafte Weiterbildungen sind Gegenstand der abhängigen Ansprüche sowie der folgenden Beschreibung.

Bei einer Vorrichtung zum Herstellen von Behältern aus thermisch konditionierten Vorformlingen aus thermoplastischem Material, wobei die Vorrichtung mindestens eine Form zum Formen des Behälters aus einem Vorformling, und mindestens eine in die Form einführbare Reckstange zum Recken eines in die Form eingelegten Vorformlings aufweist, wobei die Reckstange zumindest an einem in den Vorformling einführbaren Endabschnitt eine Fluidleitung, die fluidkommunizierend mit einem Spülgasreservoir verbindbar ist, aufweist, ist erfindungsgemäß vorgesehen, dass die Reckstange ein die Fluidleitung beherrschendes Injektorventil zum Erzeugen von Spülgaspulsen aufweist, wobei das Injektorventil an dem Endabschnitt angeordnet ist.

Die Erfindung stellt damit eine Vorrichtung zum Herstellen von Behältern bereit, bei der das Injektorventil an dem Endabschnitt der Reckstange angeordnet ist. Das Injektorventil ist damit verhältnismäßig nah an den zu kühlenden Elementen, insbesondere dem Boden der zu kühlenden kurz vorher hergestellten Behälters, angeordnet. Das Spülgas fließt aus dem Spülgasreservoir über die Fluidleitung durch die Reckstange zum Injektorventil, das am Endabschnitt der Reckstange angeordnet ist. Der Endabschnitt der Reckstange ist während des Reckprozesses im Bodenbereich des hergestellten Behälters angeordnet. Das Injektorventil kann mit dem bereitgestellten Spülgas unmittelbar am Endabschnitt, d. h. auch unmittelbar am Bodenbereich des Behälters, Spülgas auslassen. Das Auslassen des Spülgases kann gepulst erfolgen, so dass das Injektorventil Spülgaspulse erzeugt. Durch die Anordnung des Injektorventils am Endabschnitt der Reckstange wird stromabwärts des Injektorventil Totraum für das Spülgas vermieden. Durch die Vermeidung des Totraums wird die Verzögerung, mit der das Spülgas nach dem Öffnen des Injektorventils in den Behälter geleitet wird, verringert. Mit dem Injektorventil können damit kurze Spülgaspulse realisiert werden, bei denen Trägheitseffekte durch das im Totraum angeordnete Spülgas vermieden werden. Mit der Erfindung wird die Effizienz der Kühlung bei gleicher Prozesszeit erhöht. Damit steigt das Kühlpotenzial. Weiter bewirkt die Erfindung, dass der Spülgasverbrauch verringert wird und die Ausbringung der Vorrichtung zur Herstellung von Behältern gesteigert werden kann.

Das Spülgasreservoir kann zum Beispiel ein Blasluftreservoir oder eine Blasgasquelle einer Blasmaschine zum Herstellen von Behältern sein.

Gemäß der Erfindung ist das Injektorventil schaltbar und über mindestens eine Signalverbindung mit einer Steuereinrichtung verbunden.

Damit können die Spülgaspulse durch die Steuereinrichtung auf die individuellen Eigenschaften der hergestellten Behälter eingestellt werden.

Denkbar ist, dass die Signalverbindung zum Beispiel eine kabellose Signalverbindung ist.

Insbesondere wird nun keine Leitung benötigt, die in oder an der Reckstange verläuft. Durch die Bauraumvorgaben ist an bzw. in der Reckstange lediglich wenig Raum für die Verlegung von Kabeln vorhanden. Damit kann Material eingespart werden und der Aufwand bei der Herstellung der Vorrichtung zum Herstellen von Behälter reduziert werden.

Weiter kann die Signalverbindung beispielsweise eine elektrische Leitung umfassen, die mit dem Injektorventil verbunden und an der Reckstange angeordnet ist.

Mit der elektrischen Leistung kann die Ausfallsicherheit und Störungsanfälligkeit der Signalverbindung verbessert werden.

In einem weiteren Beispiel weist die Reckstange im Endabschnitt eine Verjüngung auf, wobei das Injektorventil unmittelbar angrenzend an der Verjüngung angeordnet ist.

Weiter ist denkbar, dass die Verjüngung zwischen dem Injektorventil und einer Spitze der Reckstange angeordnet ist.

Die Verjüngung der Reckstange am Endabschnitt kann für den Reckprozess benötigt werden. Das Injektorventil ist damit so nah wie möglich an der Spitze der Reckstange angeordnet. Damit wird der Totraum stromabwärts des Injektorventils weiter reduziert und die Effizienz der Vorrichtung weiter erhöht.

Weiter kann das Injektorventil zum Beispiel innerhalb der Reckstange angeordnet sein.

Bei einer Anordnung des Injektorventils innerhalb der Reckstange wird der äußere Durchmesser der Reckstange nicht durch das Injektorventil beeinflusst. Damit können Bauraumvorgaben für die Reckstange unabhängig von der Anordnung des Injektorventils erfüllt werden und ein Schutz des Injektorventils vor äußeren Einflüssen bereitgestellt werden.

Im Folgenden wird die Erfindung anhand einer beispielhaften Ausführungsform mittels der beigefügten Zeichnung beschrieben. Es zeigen:
- Figur 1: eine schematische Darstellung einer Vorrichtung zum Herstellen von Behältern, und
- Figur 2: eine schematische Querschnittsdarstellung einer Form zum Formen des Behälters aus einem Vorformling.

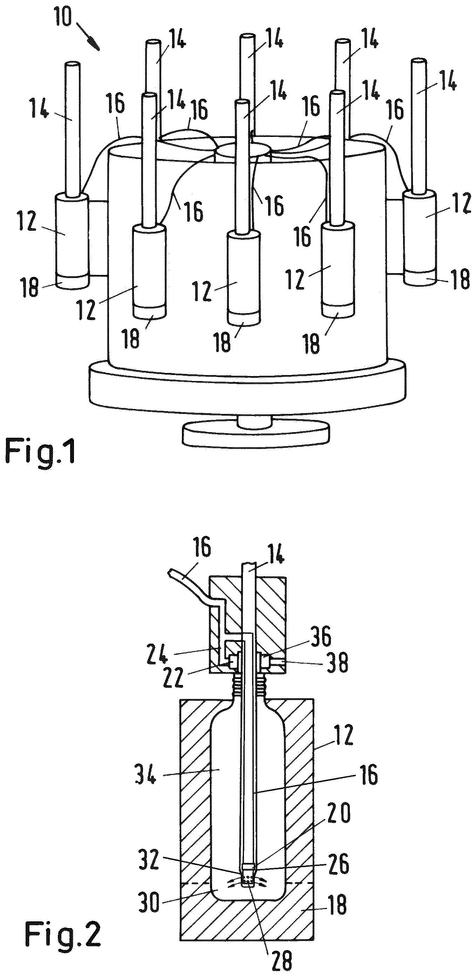

Die Vorrichtung zum Herstellen von Behältern wird im Folgenden in ihrer Gesamtheit mit dem Bezugszeichen 10 bezeichnet, wie in Figur 1 dargestellt.

Die Vorrichtung 10 ist dazu ausgebildet, Behälter aus thermoplastischem Material herzustellen. Dazu werden zunächst Vorformlinge bereitgestellt, die thermisch konditioniert werden. Die Vorrichtung 10 weist für die Herstellung der Behälter mindestens eine Form 12 auf, in die ein thermisch konditionierter Vorformling eingelegt werden kann. In dem Beispiel gemäß Figur 1 ist die Vorrichtung 10 als Rotationsmaschine mit einem Blasrad dargestellt und weist eine Vielzahl von Formen 12 auf, sodass sie in schneller Folge eine Vielzahl von Behältern aus Vorformlingen Ausformen kann.

Die Form 12 weist einen Hohlraum auf, der die äußere Gestalt eines herzustellenden Behälters aufweist. Die Form 12 umfasst weiter eine Bodenform 18, die den Boden des Behälters in dem Hohlraum ausformt. Der Hohlraum kann Entlüftungsauslässe aufweisen (nicht dargestellt), die in die Umgebung münden. Luft, die aus dem Hohlraum bei der Expansion eines Vorformlings verdrängt wird, kann über die Entlüftungsauslässe aus dem Hohlraum entweichen.

In die Form 12 kann eine Reckstange 14 eingeführt werden. Wenn die Reckstange 14 in die Form 12 eingeführt wird und ein Vorformling in der Form 12 eingelegt ist, reckt die Reckstange 14 den Vorformling entlang seiner Längsachse bis in den Bereich der Bodenform 18. Das Recken wird durch die thermische Konditionierung des thermoplastischen Materials des Vorformlings unterstützt.

Mittels einer Fluidleitung 16 kann ein Blasgas in den in die Form 12 eingelegten Vorformling eingeleitet werden. Dies bewirkt Druckerhöhung innerhalb des Vorformlings. Durch die Druckerhöhung wird der Vorformling unter anderem auch in radialer Richtung zur Längsachse gereckt und an die Wände des Hohlraums der Form 12 gepresst. Der Vorformling weist nun die Gestalt des herzustellenden Behälters auf.

Das Material des Behälters weist noch Restwärme aus der thermischen Konditionierung auf. Die Restwärme kann durch eine Kühleinheit 20 reduziert werden.

Figur 2 stellt eine Querschnittsdarstellung der Form 12 mit der Kühleinheit 20 dar. Der Vorformling ist dabei bereits zu einem Behälter 34 ausgeformt und die Reckstange 14 noch in der Form 12 angeordnet. Das Blasgas wurde über die Fluidleitung 16 durch ein Blasgasventil 22 in den Vorformling eingeführt. Bevorzugt wird das Blasgas seitlich an der Reckstange 14 vorbei in den Vorformling eingelassen. Über ein Ablassventil 36 kann das unter Druck stehende Blasgas durch eine Ablassöffnung 38 aus dem hergestellten Behälter 34 ausgelassen werden, um den Druck in dem Behälter 34 zu reduzieren.

Zu Beginn der Reduktion des Druckes in dem Behälter 34 bzw. nach einer vordefinierten Zeitspanne danach wird der Boden 30 des Behälters 34 gekühlt. Dazu kann die Reckstange 14 hohl ausgebildet sein. Der Innenraum der Reckstange 14 kann mit der Fluidleitung 16 fluidkommunizieren verbunden sein ist, die ihrerseits fluidkommunizierend mit einem Spülgasreservoir verbunden ist. Weiter kann ein Abschnitt der Fluidleitung 16 sich durch die hohle Reckstange 14 bis zu einem Endabschnitt 26 der Reckstange 14 erstrecken. Der Endabschnitt 26 ist dabei ein einem freien Ende an einer Spitze 29 der Reckstange 14 angeordnet. Die Spitze 29 ist bei vollständig eingeführter Reckstange 14 am nächsten zum Boden des Behälters 34 angeordnet.

Am Endabschnitt 26 der Reckstange 14 ist weiter ein die Fluidleitung 16 beherrschendes Injektorventil 20 angeordnet.

In diesem Beispiel kann das Injektorventil 20 innerhalb der Reckstange 14 angeordnet sein. Damit sei jedoch nicht ausgeschlossen, dass das Injektorventil 20 auch außerhalb der Reckstange 14 angeordnet sein kann.

Mittels des Injektorventils 20 kann Spülgas aus dem Spülgasreservoir über die Fluidleitung 16 durch einen Auslass 28 an der Reckstange 14 in die Form 12 eingeleitet werden.

Das Spülgas kann das Blasgas sein, mit dem aus dem Vorformling in der Form 12 der Behälter 34 hergestellt wurde. In diesem Fall ist das Spülgasreservoir auch das Blasgasreservoir bzw. die Blasgasquelle.

Alternativ kann das Spülgas ein anderes Gas sein, das in einem gesonderten Spülgasreservoir gelagert wird.

Das Injektorventil 20 kann dazu ausgebildet sein, Spülgaspulse zu erzeugen, die in den in der Form 12 hergestellten Behälter 34 gerichtet werden. Die Spülgaspulse können aus dem Endabschnitt 26 auf den Boden des Behälters gerichtet sein.

Der mindestens eine Auslass 28 ist derart angeordnet, dass er auf den Boden 30 gerichtet ist und kann als Expansionsdüse ausgebildet sein. Aus dem mindestens einen Auslass 28 wird das Spülgas mittels einer Vielzahl von Spülgaspulsen auf den Boden 30 eingeleitet, um den Boden 30 zu kühlen. Die Kühlung erfolgt beim Auslassen des Blasgases aus dem Behälter 34, während der Druck des Blasgases in dem Behälter 34 verringert wird.

Durch die Anordnung des Injektorventils 20 am Endabschnitt 26, ist zwischen dem Injektorventil 20 und dem mindestens einen Auslass 28 lediglich ein geringes Spülgasvolumen vorhanden. Dieses geringe Spülgasvolumen kann daher lediglich geringe, in der Regel zu vernachlässigende, Trägheitseffekte auf die Spülgaspulse bewirken. Die von dem Injektorventil 20 erzeugten Spülgaspulse gelangen damit ohne große Beeinflussung durch das Spülgas im Totraum zu dem mindestens einen Auslass 28.

Die Spülgaspulse können getaktet sein, sodass über die gesamte Zeitdauer der Kühlung kein kontinuierlicher Spülgasstrom durch den mindestens einen Auslass 28 auf den Boden 30 eingeleitet wird. Die Kühlung erfolgt in der Hauptsache durch die Expansion des Spülgases nach dem Austreten aus dem Auslass 28. Dabei erfolgt eine adiabatische Expansion des Spülgases, bei der das Spülgas abkühlt. Das abgekühlte Spülgas trifft dann auf den Boden 30 des Behälters 34 und kann die Restwärme an dem Boden 30 des Behälters 34 aufnehmen.

Bei jedem Spülgaspuls wird der Druck in dem Behälter 34 zunächst erhöht und fällt nach dem Ende des Spülgaspulses wieder ab. Dazu kann zum Beispiel das Ablassventil 36 während der gesamten Zeitdauer der Kühlung geöffnet bleiben, um einen Druckausgleich über die Ablassöffnung 38 zu bewirken.

Weiter ist die Taktung der Spülgaspulse derart ausgebildet, dass ein Spülgaspuls erst dann begonnen wird, wenn nach dem vorherigen Spülgaspuls ein Druckausgleich stattgefunden hat. Mit Beginn jedes Spülgaspulses wird damit ein für diese Randbedingungen maximal möglicher Druckdifferenz zwischen dem Druck des Spülgases und dem Inhalt des Behälters 34 bewirkt. Dies hat zur Folge, dass die Expansion des Spülgases maximiert wird und damit eine maximale Kühlwirkung bewirkt wird.

Der Endabschnitt 26 kann weiter eine Verjüngung 32 aufweisen, wobei sich der Endabschnitt 26 zur Spitze 29 der Reckstange 14 verjüngt. Das Injektorventil 20 kann stromabwärts der Spülgasstromrichtung vor der Verjüngung 32 angeordnet sein, so dass die Verjüngung 32 zwischen dem Injektorventil 20 und der Spitze der Reckstange 14 angeordnet ist.

Die Reckstange 14 kann durch Hohlbohrung hergestellt sein. Sie kann weiter einen Außendurchmesser von 14 mm aufweisen, wobei die Hohlbohrung einen Durchmesser von 9 mm aufweisen kann. Nach der Verjüngung 32 kann die Bohrung in der Reckstange 14 einen Durchmesser von 3 mm aufweisen. Das Injektorventil 20 ist in diesem Beispiel unmittelbar vor der Verjüngung 32 im Bereich mit dem Durchmesser von 9 mm angeordnet.

Zum Erzeugen der Spülgaspulse kann das Injektorventil 20 schaltbar sein. Das Schalten des Injektorventils 20 kann mittels einer Steuereinrichtung 40 gesteuert werden. Dazu kann das Injektorventil 20 mittels einer Signalverbindung 24 mit der Steuereinrichtung 40 verbunden sein.

Die Signalverbindung 24 kann kabellos sein oder über eine elektrische Leitung geführt werden. Die elektrische Leitung kann in oder außen an der Reckstange 14 angeordnet sein.

### Bezugszeichenliste

- 10: Vorrichtung zum Herstellen von Behältern
- 12: Form
- 14: Reckstange
- 16: Fluidleitung
- 18: Bodenform
- 20: Injektorventil
- 22: Blasgasventil
- 24: Signalverbindung
- 26: Endabschnitt
- 28: Auslass
- 29: Spitze
- 30: Boden
- 32: Verjüngung
- 34: Behälter
- 36: Ablassventil
- 38: Ablassöffnung
- 40: Steuereinrichtung

## Patentansprüche

1. Vorrichtung zum Herstellen von Behältern aus thermisch konditionierten Vorformlingen aus thermoplastischem Material, wobei die Vorrichtung (10) mindestens eine Form (12) zum Formen des Behälters aus einem Vorformling, und mindestens eine in die Form (12) einführbare Reckstange (14) zum Recken eines in die Form (12) eingelegten Vorformlings aufweist, wobei die Reckstange (14) zumindest an einem in den Vorformling einführbaren Endabschnitt (26) eine Fluidleitung (16), die fluidkommunizierend mit einem Spülgasreservoir verbindbar ist, aufweist, **dadurch gekennzeichnet, dass** die Reckstange (14) ein die Fluidleitung beherrschendes Injektorventil (20) zum Erzeugen von Spülgaspulsen aufweist, wobei das Injektorventil (20) an dem Endabschnitt (26) angeordnet ist wobei das Injektorventil (20) schaltbar ist und über mindestens eine Signalverbindung (24) mit einer Steuereinrichtung (40) verbunden ist.

2. Vorrichtung nach Anspruch 1, **dadurch gekennzeichnet, dass** die Signalverbindung (24) eine kabellose Signalverbindung ist.

3. Vorrichtung nach Anspruch 1 oder 2, **dadurch gekennzeichnet, dass** die Signalverbindung (24) eine elektrische Leitung umfasst, die mit dem Injektorventil (20) verbunden und an der Reckstange (14) angeordnet ist.

4. Vorrichtung nach einem der Ansprüche 1 bis 3, **dadurch gekennzeichnet, dass** die Reckstange (14) im Endabschnitt (26) eine Verjüngung (32) aufweist, wobei das Injektorventil (20) unmittelbar angrenzend an der Verjüngung (32) angeordnet ist.

5. Vorrichtung nach Anspruch 4, **dadurch gekennzeichnet, dass** die Verjüngung zwischen dem Injektorventil (20) und einer Spitze (29) der Reckstange (14) angeordnet ist.

6. Vorrichtung nach einem der Ansprüche 1 bis 5, **dadurch gekennzeichnet, dass** das Injektorventil (20) innerhalb der Reckstange (14) angeordnet ist.

## Claims

1. Device for producing containers from thermally conditioned preforms of thermoplastic material, the device (10) having at least one mould (12) for shaping the container from a preform, and at least one stretching rod (14) which can be introduced into the mould (12) for stretching a preform inserted into the mould (12), the stretching rod (14) having a fluid line (16) at least at an end section (26) which can be introduced into the preform, which can be connected to a flushing gas reservoir in a fluid-communicating manner, **characterised in that** the stretching rod (14) has an injector valve (20) controlling the fluid line for generating flushing gas pulses, the injector valve (20) being arranged on the end section (26), the injector valve (20) being switchable and connected to a control device (40) via at least one signal connection (24).

2. Device according to claim 1, **characterised in that** the signal connection (24) is a wireless signal connection.

3. Device according to claim 1 or 2, **characterised in that** the signal connection (24) comprises an electrical line which is connected to the injector valve (20) and is arranged on the stretching rod (14).

4. Device according to one of claims 1 to 3, **characterised in that** the stretching rod (14) has a taper (32) in the end section (26), wherein the injector valve (20) is arranged directly adjacent to the taper (32).

5. Device according to claim 4, **characterised in that** the taper is arranged between the injector valve (20) and a tip (29) of the stretching rod (14).

6. Device according to one of claims 1 to 5, **characterised in that** the injector valve (20) is arranged inside the stretching rod (14).

## Revendications

1. Dispositif pour fabriquer des récipients à partir de préformes conditionnées thermiquement en matériau thermoplastique, le dispositif (10) présentant au moins un moule (12) pour former le récipient à partir d'une préforme, et au moins une barre d'étirage (14) pouvant être introduite dans le moule (12) pour étirer une préforme placée dans le moule (12), la barre d'étirage (14) présentant, au moins sur une section d'extrémité (26) pouvant être introduite dans la préforme, une conduite de fluide (16), qui peut être reliée en communication de fluide avec un réservoir de gaz de rinçage, **caractérisée en ce que** la barre d'étirage (14) présente une soupape d'injection (20) maîtrisant la conduite de fluide pour générer des impulsions de gaz de rinçage, la soupape d'injection (20) étant disposée sur la section d'extrémité (26), la soupape d'injection (20) pouvant être commutée et étant reliée par au moins une liaison de signalisation (24) à un dispositif de commande (40).

2. Dispositif selon la revendication 1, **caractérisé en ce que** la liaison de signalisation (24) est une liaison de signalisation sans fil.

3. Dispositif selon la revendication 1 ou 2, **caractérisé en ce que** la liaison de signalisation (24) comprend une ligne électrique reliée à la soupape d'injection (20) et disposée sur la barre d'étirement (14).

4. Dispositif selon l'une des revendications 1 à 3, **caractérisé en ce que** la barre d'étirage (14) présente un rétrécissement (32) dans la section d'extrémité (26), la soupape d'injection (20) étant disposée de manière immédiatement adjacente au rétrécissement (32).

5. Dispositif selon la revendication 4, **caractérisé en ce que** le rétrécissement est disposé entre la soupape d'injection (20) et une pointe (29) de la barre d'étirage (14).

6. Dispositif selon l'une des revendications 1 à 5, **caractérisé en ce que** la soupape d'injection (20) est disposée à l'intérieur de la barre d'étirage (14).
